# EUROPÄISCHE PATENTSCHRIFT

(11) **EP 0 780 270 B1**
(45) Veröffentlichungstag und Bekanntmachung des Hinweises auf die Patenterteilung: **22.03.2000**
(21) Anmeldenummer: 96119174.9
(22) Anmeldetag: 29.11.1996
(51) Int. Cl.: B60R 22/415

(54) **Gurtaufroller für Fahrzeugsicherheitsgurte**
Vehicle seat belt retractor
Enrouleur de ceintures de sécurité pour véhicule

(30) Priorität: 22.12.1995 DE 29520425 U
(43) Veröffentlichungstag der Anmeldung: 25.06.1997
(73) Patentinhaber: TRW Occupant Restraint Systems GmbH & Co. KG, 73551 Alfdorf (DE)
(72) Erfinder: Bareiss, Rainer, 73553 Alfdorf (DE); Rink, Jürgen, 73550 Waldstetten (DE)
(74) Vertreter: Degwert, Hartmut, Dipl.-Phys.

(56) Entgegenhaltungen:
- EP-A- 0 535 551

## Beschreibung

Die Erfindung betrifft einen Gurtaufroller für Fahrzeugsicherheitsgurte, insbesondere einen Gurtaufroller mit einer Kindersicherung, die unabhängig von der fahrzeug- und/oder gurtbandsensitiven Sperreinrichtung wirkt.

Ein derartiger Gurtaufroller enthält einen Sperrmechanismus zur Blockierung der in einem Gehäuse drehbar gelagerten Gurtspule. Für die Aktivierung des Sperrmechanismus ist ein Auslösemechanismus vorgesehen, der eine relativ zur Gurtspule begrenzt verdrehbare Trägheitsscheibe, gekoppelt mit einer Steuerscheibe, aufweist, durch deren Relativdrehung zur Gurtspule der Sperrmechanismus aktiviert wird. Für die Aktivierung der Kindersicherung ist ein Schaltelement vorgesehen, das zwischen zwei stabilen Schaltstellungen umschaltbar ist und in der ersten Schaltstellung den Sperrmechanismus aktiviert sowie in der zweiten Stellung den Sperrmechanismus freigibt. Die Umsteuerung des Schaltelements zwischen den zwei Schaltstellungen erfolgt in Abhängigkeit von der auf der Gurtspule aufgewickelten Gurtbandmenge, indem die Gurtspulendrehung mittels eines Getriebes untersetzt und in die gewünschten Schalthübe umgesetzt wird.

Bei einem aus der gattungsbildenden EP 0 535 551 A2 bekannten Gurtaufroller besteht das Getriebe aus einem drehfest mit der Gurtspule verbundenen Hauptzahnrad und zwei an den Enden einer Schaltwippe drehbar gelagerten Hilfszahnrädern, die ständig mit dem Hauptzahnrad in Kämmeingriff stehen. Hauptzahnräder und Hilfszahnräder sind mit seitlich angebrachten Schaltnocken versehen, die nur bei bestimmten Relativdrehstellungen der Zahnräder zueinander gegeneinanderstoßen und dadurch die Schaltwippe aus der einen stabilen Schaltstellung in die andere umschalten. An die Schaltwippe ist ein Betätigungsarm angeschlossen, der eine schwenkbar am Gehäuse gelagerte Klinke betätigt, die mit der Außenverzahnung der Steuerscheibe zusammenwirkt.

Die Unterbringung der für eine solche Kindersicherung erforderlichen zusätzlichen Bauelemente in einem vorhandenen Gurtaufroller bereitet aber Schwierigkeiten, insbesondere wegen des zusätzlich erforderlichen Bauraums in Axialrichtung der Gurtspule.

Durch die Erfindung wird ein Gurtaufroller für Fahrzeugsicherheitsgurte zur Verfügung gestellt, bei dem sich die zur Verwirklichung der Kindersicherung erforderlichen zusätzlichen Bauelemente problemlos in eine vorhandene Konstruktion integrieren lassen, insbesondere wegen der geringen Baugröße in Axialrichtung der Gurtspule. Der erfindungsgemäße Gurtaufroller für Fahrzeugsicherheitsgurte verfügt in bekannter Weise über eine in einem Gehäuse drehbar gelagerte Gurtspule, einen Sperrmechanismus zur Blockierung der Gurtspulendrehung und einen Auslösemechanismus, der eine relativ zur Gurtspule begrenzt verdrehbare Trägheitsscheibe aufweist, durch deren Relativdrehung zur Gurtspule der Sperrmechanismus aktivierbar ist. Ferner ist eine Schaltklinke vorhanden, die selektiv verschwenkbar ist zwischen einer Eingriffsstellung an der Außenverzahnung der Steuerscheibe und einer Normalstellung außer Eingriff mit dieser Außenverzahnung. Ein von der Gurtspule angetriebener Zahnkranz kämmt mit zwei an den Enden einer schwenkbar am Gehäuse gelagerten Wippe drehbar gelagerten Zahnrädern. An die Wippe ist ein Betätigungsarm zur Betätigung der Schaltklinke angeschlossen. Ferner sind am Umfang der Zahnräder und des Zahnkranzes Schaltelemente angebracht, die bei fest vorgegebenen Relativ-Drehstellungen der Zahnräder und des Zahnkranzes aufeinanderstoßen, wobei die Wippe verschwenkt wird. Gemäß der Erfindung sind die Schaltelemente als radial verlängerte Schaltzähne einerseits und geschlossene Zahnlücken andererseits ausgebildet und so angeordnet, daß bei Auftreffen einer der geschlossenen Zahnlücken auf einen der Schaltzähne die Wippe verschwenkt wird. Diese Schaltelemente erstrecken sich somit axial nicht über den Zahnkranz bzw. die Zahnräder hinaus und erfordern daher keinen zusätzlichen axialen Bauraum.

Durch einen besonders geringen Aufwand zeichnet sich eine bevorzugte Ausführungsform aus, bei welcher der Zahnkranz an einer Seitenfläche der Kupplungsscheibe angebracht ist und insbesondere aus an die Seitenfläche der Kupplungsscheibe angeformten Zahnelementen besteht. Der Zahnkranz hat vorzugsweise einen wesentlich größeren Durchmesser als die Zahnräder, und letztere befinden sich mit der Wippe am Außenumfang des Zahnkranzes, wo sie in einer Ecke der Abdeckkappe des Gurtaufrollers platzsparend angeordnet werden können.

Weitere Einzelheiten der Erfindung ergeben sich aus der folgenden Beschreibung und aus der Zeichnung, auf die Bezug genommen wird. In der Zeichnung zeigen:
Fig. 1 eine perspektivische Seitenansicht einer ersten Ausführungsform des Gurtaufrollers bei nahezu vollständig abgewickeltem Gurtband;
Fig. 2 einen Ausschnitt der gleichen Seitenansicht im Zustand vollständig abgewickelten Gurtbands;
Fig. 3 eine entsprechende Teilansicht im Zustand des beginnenden Wiederaufwickelns von Gurtband;

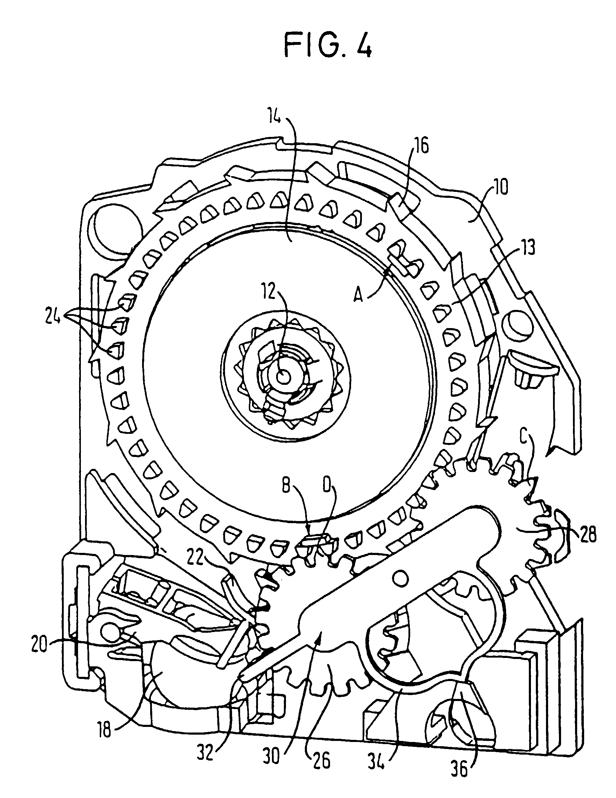

Fig. 4 eine der Fig. 1 entsprechende Seitenansicht im Zustand des zu etwa einem Viertel wieder aufgewickelten Gurtbands;
Fig. 5 eine Explosionsansicht einer bevorzugten Ausführungsform des Gurtaufrollers; und
Fig. 6 eine perspektivische Teilansicht des Gurtaufrollers.

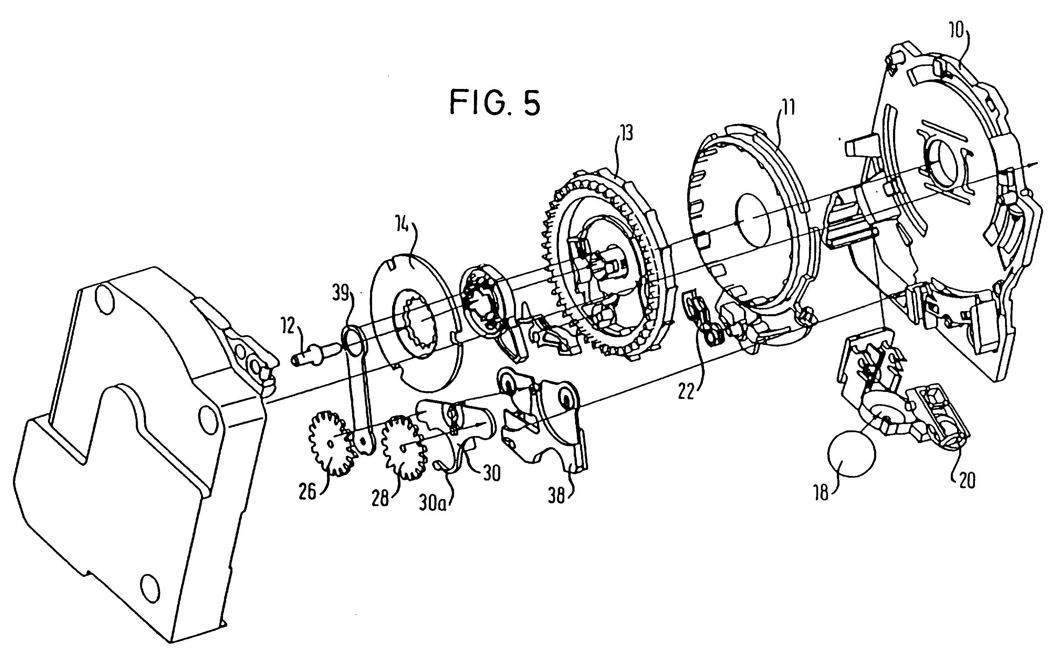

Von dem Gurtaufroller ist hier nur die sogenannte Steuerseite gezeigt, auf welcher sich der fahrzeug- und gurtbandsensitive Ansteuermechanismus für den Sperrmechanismus befindet. Eine Lagerplatte 10 ist seitlich an das Gehäuse des Gurtaufrollers angesetzt. Fixiert und befestigt an einem seitlichen Stummel der Gurtspule durch einen Lagerstift 12 ist eine Kupplungsscheibe 13 angeschlossen. Die Kupplungsscheibe 13 ist an ihrem Außenumfang mit einer Außenverzahnung 16 versehen und mit einer Trägheitsscheibe 14 gekoppelt. Diese Außenverzahnung wirkt in bekannter Weise mit einem Kugelsensor 18 zusammen, auf dem eine schwenkbare Klinke 20 aufliegt. Eine weitere Klinke 22, die an einem Steuerhebel 11 (Fig. 5) schwenkbar gelagert ist, wirkt ebenfalls mit der Außenverzahnung 16 der Kupplungsscheibe 13 zusammen und kann zwischen einer Eingriffsposition an dieser Außenverzahnung und einer Normalstellung außer Eingriff mit der Außenverzahnung verschwenkt werden.

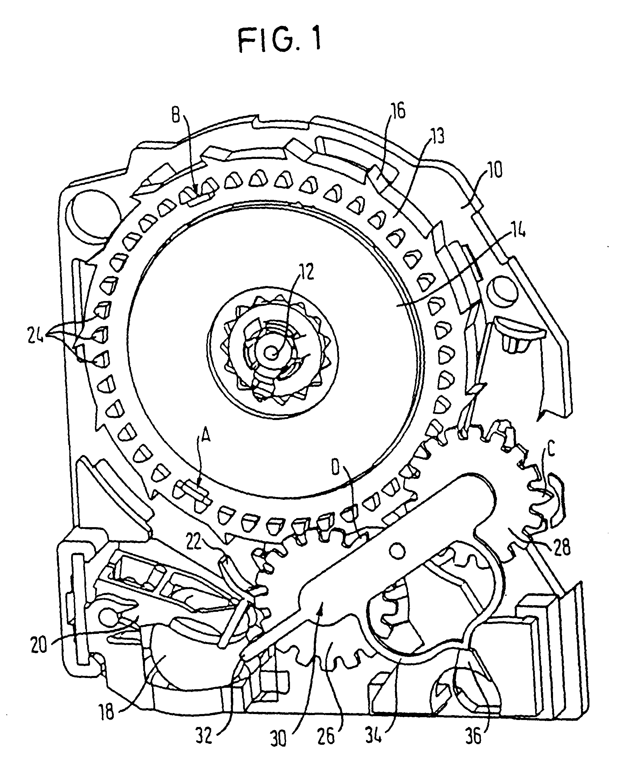

Nahe dem Außenumfang der Kupplungsscheibe 13 ist an ihrer Seitenfläche ein Zahnkranz durch einzelne angeformte Zahnelemente 24 gebildet, die in Umfangsrichtung voneinander beabstandet sind. Mit diesem Zahnkranz aus den Zahnelementen 24 stehen zwei Zahnräder 26, 28, die an den Enden einer schwenkbaren Wippe 30 drehbar gelagert sind, permanent in Kämmeingriff. An die Wippe 30 ist ein elastischer Betätigungsarm 32 angeschlossen, der an der Klinke 22 angreift. Bei der in Fig. 1 gezeigten Stellung hält der Betätigungsarm 32 die Klinke 22 in ihrer Ruhestellung außer Eingriff mit der Außenverzahnung 16 der Kupplungsscheibe 13. An die Wippe 30 ist ferner ein Federbügel 34 angeformt, der mit einer Rastnase 36 in solcher Weise zusammenwirkt, daß die Wippe 30 jeweils eine von zwei stabilen Schwenkstellungen einnehmen kann.

Je zwei der Zahnelemente 24 sind mit einer durch eine Brücke A bzw. B verschlossenen Zahnlücke versehen. Ferner weisen die Zahnräder 26, 28 jeweils einen radial verlängerten Zahn C bzw. D auf.

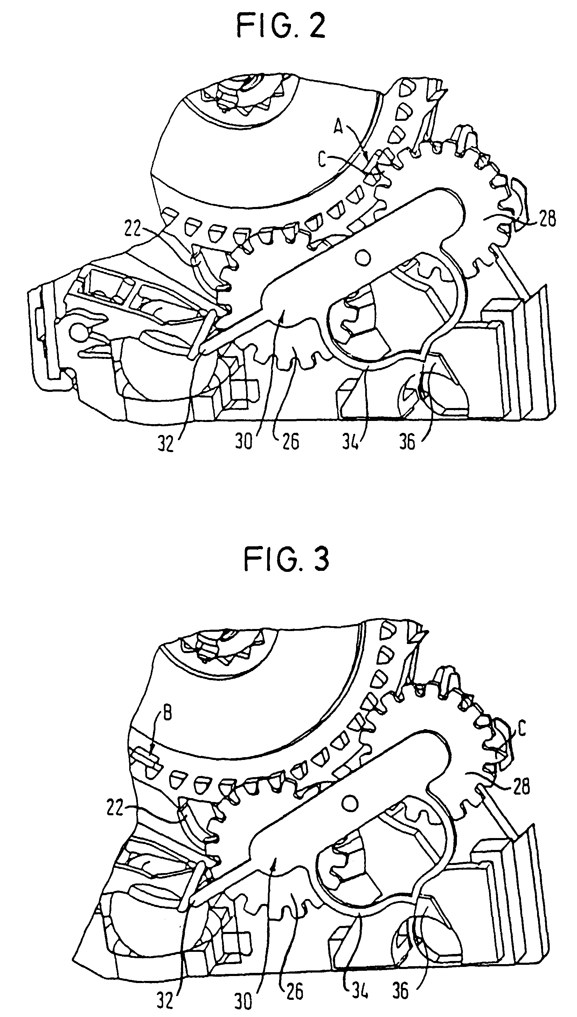

Ein Gurtaufroller mit Kindersicherung wird gewöhnlich zwischen der normalen Betriebsfunktion, bei welcher der Sperrmechanismus fahrzeug- und gurtbandsensitiv anspricht, und der Blockierfunktion, in welcher Gurtband aufgerollt, aber nicht abgezogen werden kann, dadurch umgeschaltet, daß das Gurtband vollständig von der Gurtspule abgezogen wird. Fig. 1 zeigt den Zustand unmittelbar vor vollendetem Gurtbandabzug. Der Betätigungsarm 32 der Wippe 30 hält die Klinke 22 im Normalzustand außer Eingriff mit der Außenverzahnung 16 der Kupplungsscheibe 13. Die mit A bezeichnete Brücke, welche die Lücke zwischen zwei benachbarten Zahnelementen 24 schließt, wird nun bei weiterem Gurtbandabzug, durch welchen die Kupplungsscheibe 13 entgegen dem Uhrzeigersinn verdreht wird, bis in den Bereich des Zahnrads 28 verlagert und trifft dort bei vollständig abgewickeltem Gurtband auf den verlängerten Zahn C, der als Einschaltzahn bezeichnet wird. Durch das Anstoßen des Einschaltzahns C auf der Brücke A wird das Zahnrad 28 abgewiesen, so daß die Wippe 30 verschwenkt wird. Dieser Zustand ist in Fig. 2 dargestellt. Der Betätigungsarm 32 der Wippe 30 hebt nun die Klinke 22 an, so daß die Klinkenspitze in die Bewegungsbahn der Außenverzahnung 16 der Kupplungsscheibe 13 hineinragt.

Anschließend wird das Gurtband auf der Gurtspule wieder aufgerollt, wobei die Klinke 22 sich der Drehung der Kupplungsscheibe 13 nicht widersetzt, da sie von den Zahnrücken der Außenverzahnung 16 abgewiesen wird, wie in Fig. 3 veranschaulicht ist. Wenn jedoch nun erneut Gurtband abgezogen wird, sperrt die Klinke 22 die Drehung der Gurtspule 14, wodurch letztlich der (nicht gezeigte) Sperrmechanismus des Gurtaufrollers aktiviert wird. In diesem Zustand können Kindersitze oder Lasten an einem Fahrzeugsitz gesichert werden.

Beim Ablegen des Gurts wird das Gurtband weiter auf der Gurtspule aufgewickelt. Wenn eine vorbestimmte Gurtbandmenge, beispielsweise 75 %, wieder aufgewickelt ist, trifft nunmehr die Brücke B zwischen zwei benachbarten Zahnelementen auf den verlängerten Zahn D des Zahnrads 26, welcher als Ausschaltzahn bezeichnet wird. Das Zahnrad 26 wird radial auswärts gestoßen und bewirkt ein Verschwenken der Wippe 30 in die andere ihrer zwei stabilen Stellungen, wobei der Betätigungsarm 32 die Klinke 22 freigibt. Die normale Betriebsfunktion des Gurtaufrollers ist nun wieder hergestellt.

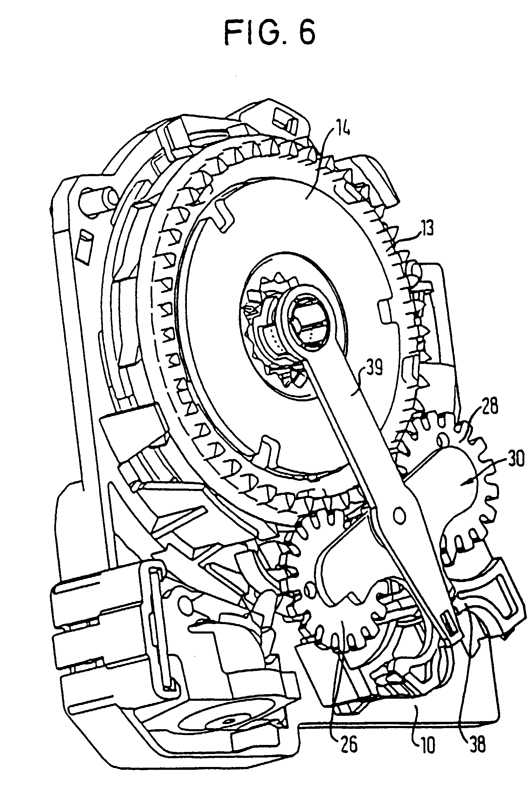

Bei der in den Figuren 5 und 6 gezeigten, bevorzugten Ausführungsform des Gurtaufrollers ist die Wippe 30 an einem Lagerbügel 38 gelagert, der seinerseits an der Lagerplatte 10 beweglich gelagert ist. Ein Lenker 39, der an seinem einen Ende eine Nabe der Kupplungsscheibe 13 umgreift, ist an seinem anderen Ende an das Schwenklager der Wippe 30 angeschlossen und hält diese so in gleichbleibendem Abstand vom Außenumfang der Kupplungsscheibe 13. Durch diese Maßnahme kann sich das bei längerem Betrieb größer werdende Spiel der Gurtspulenlagerung nicht auf den Abstand zwischen der Wippe 30 und der Verzahnung am Außenumfang der Kupplungsscheibe 13 auswirken, so daß die Einstellung der Schaltpunkte erhalten bleibt.

Abweichend von der zuvor beschriebenen Ausführungsform ist die Wippe 30 mit einem Federarm 30a versehen, der in ähnlicher Weise wie der Federbügel 34 bei der zuvor beschriebenen Ausführungsform das bistabile Verhalten der Wippe 30 gewährleistet.

## Patentansprüche

1. Gurtaufroller für Fahrzeugsicherheitsgurte, mit
a) einer in einem Gehäuse drehbar gelagerten Gurtspule;
b) einem Sperrmechanismus zur Blockierung der Gurtspulendrehung;
c) einem Auslösemechanismus, der eine an der Gurtspule angeschlossenem, mit einer Außenverzahnung (16) versehene Kupplungsscheibe (13) aufweist;
d) einer Klinke (22), die selektiv verschwenkbar ist zwischen einer Eingriffsstellung an der Außenverzahnung (16) der Kupplungsscheibe (13) und einer Normalstellung außer Eingriff mit dieser Außenverzahnung (16);
e) einem von der Gurtspule angetriebenen Zahnkranz (24) und zwei mit diesem kämmenden, an den Enden einer schwenkbar am Gehäuse gelagerten Wippe (30) drehbar gelagerten Zahnrädern (26, 28);
f) einem an die Wippe (30) angeschlossenen Betätigungsarm (32) zur Betätigung der Klinke (22);
g) am Umfang der Zahnräder (26, 28) und des Zahnkranzes (24) angebrachte Schaltelemente, die bei fest vorgegebenen Relativ-Drehstellungen der Zahnräder (26, 28) und des Zahnkranzes (24) aufeinanderstoßen, wobei die Wippe (30) verschwenkt wird;
dadurch gekennzeichnet, daß die Schaltelemente als radial verlängerte Schaltzähne (C, D) einerseits und geschlossene Zahnlücken (A, B) andererseits ausgebildet und so angeordnet sind, daß bei Auftreffen einer der geschlossenen Zahnlücken (A, B) auf einen der Schaltzähne (C, D) die Wippe (30) verschwenkt wird.

2. Gurtaufroller nach Anspruch 1, dadurch gekennzeichnet, daß der Zahnkranz an einer Seitenfläche der Kupplungsscheibe (13) angebracht ist.

3. Gurtaufroller nach Anspruch 1, dadurch gekennzeichnet, daß der Zahnkranz aus an die Seitenfläche der Kupplungsscheibe (13) angeformten Zahnelementen (24) besteht.

4. Gurtaufroller nach Anspruch 3, dadurch gekennzeichnet, daß die Zahnelemente (24), mit Ausnahme der geschlossenen Zahnlücken (A,B), in Umfangsrichtung voneinander beabstandet sind.

5. Gurtaufroller nach einem der vorstehenden Ansprüche, dadurch gekennzeichnet, daß der Zahnkranz (24) einen wesentlich größeren Außendurchmesser aufweist als die Zahnräder.

6. Gurtaufroller nach einem der vorstehenden Ansprüche, dadurch gekennzeichnet, daß die Wippe (30) an einem beweglichen Lagerbügel (38) gelagert ist, der die Wippe (30) mittels eines an eine Nabe der Kupplungsscheibe (13) angeschlossenen Lenkers (39) in gleichbleibendem Abstand vom Außenumfang der Kupplungsscheibe (13) hält.

## Claims

1. A belt retractor for vehicle safety belts, comprising
a) a belt drum rotatably mounted in a housing;
b) a locking mechanism for preventing rotation of the belt drum;
c) a tripping mechanism, which has a coupling disk (13) connected with the belt drum and provided with external gear teeth (16);
d) a pawl (22) which is able to be selectively pivoted between an engagement position at the external gear teeth (16) of the coupling disk (13) and a normal position out of engagement with said external gear teeth (16);
e) a ring (24) of gear teeth driven by the belt drum and two gear wheels (26, 28) in mesh with said ring (24) of gear teeth, said gear wheels (26, 28) being rotatably mounted on the ends of a rocking member (30) pivotally mounted on the housing;
f) an actuating arm (32) connected with the rocking member (30) for the operation of the pawl (22); and
g) switching elements provided on the periphery of the gear wheels (26, 28) and of the ring (24) of gear teeth, said switching elements abutting against one another in permanently set relative angular positions of the gear wheels (26, 28) and of the ring (24) of gear teeth, said rocking member (30) being pivoted thereby;
characterized in that said switching elements are formed as radially extended switching teeth (C, D) on the one hand and as closed tooth gaps (A, B) on the other hand and are arranged such that on impact of one of said closed tooth gaps (A, B) upon one of said switching teeth (C, D) said rocking member (30) is pivoted.

2. The belt retractor as claimed in claim 1, characterized in that the ring of gear teeth is arranged on one lateral surface of the coupling disk (13).

3. The belt retractor as claimed in claim 1, characterized in that the ring of gear teeth comprises tooth elements (24) formed integrally with the lateral surface of the coupling disk (13).

4. The belt retractor as claimed in claim 3, characterized in that with the exception of the closed tooth gaps (A, B), the tooth elements (24) are spaced from each other in the peripheral direction.

5. The belt retractor as claimed in any of the preceding claims, characterized in that the ring (24) of gear teeth has a substantially larger external diameter than the gear wheels.

6. The belt retractor as claimed in any of the preceding claims, characterized in that the rocking member (30) is pivotally mounted on a movable bearing bracket (38) which, by means of a link (39) connected with a hub of the coupling disk (13), maintains the rocking member (30) at a constant distance from the external periphery of the coupling disk (13).

## Revendications

1. Enrouleur de ceinture pour ceintures de sécurité de véhicule, comprenant
a) une bobine de ceinture montée de facon à pouvoir tourner dans un boîtier,
b) un mécanisme de blocage servant à bloquer la rotation de la bobine de la ceinture,
c) un mécanisme de déclenchement, qui présente un disque d'accouplement (13) pourvu d'une denture extérieure (16), raccordé à la bobine de la ceinture,
d) un cliquet (22), qui peut pivoter de façon sélective entre une position de venue en prise sur la denture extérieure (16) du disque d'accouplement (13) et une position normale qui est hors de prise d'avec cette denture extérieure (16),
e) une couronne dentée (24) entraînée par la bobine de la ceinture et deux roues dentées (26, 28) engrenant avec celle-ci, montées de façon à pouvoir tourner aux extrémités d'une bascule (30) montée de facon à pouvoir pivoter sur le boîtier,
f) un bras d'actionnement (32) raccordé à la bascule (30), servant à actionner le cliquet (22),
g) des éléments de commande mis sur le poutour des roues dentées (26, 28) et de la couronne dentée (24), qui viennent en butée les uns sur les autres quand les roues dentées (26, 28) et la couronne dentée (24) sont dans des positions de rotation relatives prédéfinies de facon fixe, en faisant pivoter la bascule (30),
caractérisé en ce que les éléments de commande sont constitués d'une part comme des dents de commande (C, D) prolongées radialement et d'autre part comme des intervalles de dents fermés (A, 3) et disposés de telle sorte que la bascule (30) pivote lors de la rencontre d'un des intervalles de dents fermés (A, B) avec une des dents de commande (C, D).

2. Enrouleur de ceinture selon la revendication 1, caractérisé en ce que la couronne dentée est mise sur la face latérale du disque d'accouplement (13).

3. Enrouleur de ceinture selon la revendication 1, caractérisé en ce que la couronne dentée consiste en des éléments de dents (24) formés sur la face latérale du disque d'accouplement (13).

4. Enrouleur de ceinture selon la revendication 3, caractérisé en ce que les éléments de dents (24), à l'exception des intervalles de dents fermés (A, B), sont espacés les uns des autres dans le sens périphérique.

5. Enrouleur de ceinture selon l'une des revendications précédentes, caractérisé en ce que la couronne dentée (24) présente un diamètre extérieur sensiblement plus grand que les roues dentées.

6. Enrouleur de ceinture selon l'une des revendications précédentes, caractérisé en ce que la bascule (30) est montée sur un étrier mobile de palier (38), qui maintient la bascule (30) au moyen d'une bielle (39), raccordée à un moyeu du disque d'accouplement (13), à une distance restant constante du pourtour extérieur du disque d'accouplement (13).
